# EUROPÄISCHE PATENTANMELDUNG

(11) **EP 1 008 302 A2**
(43) Veröffentlichungstag der Anmeldung: **14.06.2000**
(21) Anmeldenummer: 99122382.7
(22) Anmeldetag: 10.11.1999
(51) Int. Cl.: A22C 5/00, B02C 25/00

(54) **Verfahren und Vorrichtung zum Steuern des Kutters bei der Herstellung von Wurstbrät**

(30) Priorität: 28.11.1998 DE 19855083; 17.08.1999 DE 19938983
(71) Anmelder: Arndt, Burkhard, 17034 Neubrandenburg (DE); Deisenroth, Rolf, 17033 Neubrandenburg (DE); Haack, Eberhard, Dr., 06108 Halle/S. (DE); Regenstein, Günter, 17036 Neubrandenburg (DE)
(72) Erfinder: Arndt, Burkhard, 17034 Neubrandenburg (DE); Deisenroth, Rolf, 17033 Neubrandenburg (DE); Haack, Eberhard, Dr., 06108 Halle/S. (DE); Regenstein, Günter, 17036 Neubrandenburg (DE)
(74) Vertreter: Voss, Karl-Heinz

(57) **Zusammenfassung**

Die Erfindung betrifft ein Verfahren und eine Vorrichtung zum Steuern des Kutterns zur Herstellung von Wurstbrät, insbesondere Brühwurstbrät.
Aufgabe der Erfindung ist es, ein Verfahren zu entwickeln, das eine Ermittlung der maximal möglichen Schüttung (Wassermenge) entsprechend den spezifischen Eigenschaften des Rohstoffes während des Kutterprozeßes ermöglicht und weiterhin den Schneiddruck und/oder Durchflußspalt als Haltekraft für den Rohstoff ständig im optimalen Bereich hält.

Erfindungsgemäß wird erst nur der Fleisch- oder Fleisch/Fettanteil der herzustellenden Brätmasse ohne Schüttungsmenge und ohne weitere Ingredienzien eingebracht und in einer folgenden Meßwertermittlungsphase bei laufender Zerkleinerung der Zunahmewert der Widerstandskraft (Viskosität) der Masse ermittelt. In Abhängigkeit vom Anstiegsverhalten der Widerstandskraft (Viskosität) der Masse wird die Schüttungsmenge berechnet und anschließend zugegeben.
Mit diesen Verfahrensschritten oder autark wird in Abhängigkeit von den verfahrensbestimmenden Prozeßparametern und den Stoffzustandsänderungen, der Schneidhaubenraum und/oder Durchflußspalt in der Schneidhaube in der Größe und/oder Geometrie und/oder Lage während der Prozeßstufen verändert. Gegenstand sind auch mehrere Vorrichtungsvarianten zur Durchführung des Verfahrens.

## Beschreibung

Die Erfindung betrifft ein Verfahren zum Steuern des Kutterns zur Herstellung von Wurstbrät, insbesondere Brühwurstbrät.
Um ein Brät mit hoher Ausbeute und guten optischen und sensorischen Eigenschaften herzustellen, sind mehrere Verfahrensparameter einzuhalten, die wiederum von den Fleischeigenschaften beeinflußt werden. Zum einen muß das Muskeleiweiß durch die Zerkleinerung maximal aufgeschlossen werden, es darf aber durch die entstehenden höheren Temperaturen nicht koagulieren. Das Fett soll optimal emulgiert werden, um strukturbildend im Fett-Eiweiß-Komplex zu wirken. Die Wasserschüttung ist optimal bei, bzw. nach der maximalen Eiweißaufschließung durchführbar. Die Größe der Wasserzugabe beeinflußt wesentlich die Ausbeute, eine überdosierung vermindert aber die Brätqualität und führt zu Fehlproduktionen.
Diese Bedingungen sind aber vom Fleischeinsatz der jeweiligen Charge abhängig. Die Fleischqualität und die Anteile an Fett, Eiweiß, Bindegewebe u.a. schwanken in Abhängigkeit von vielen Faktoren wie Tierrasse, Alter und Fütterung. Es kann deshalb kein allgemeingültiges standardverfahren vorgegeben werden.
Das Gleiche betrifft den Schneidprozeß an sich. Bekannte Einflußfaktoren sind z. B. die Messerdrehzahl, der Schneidspalt und eine gute Brätzu- und -ableitung am Messerkopf. Mit zunehmendem Zerkleinerungsgrad des Brätes nimmt auch der Einfluß der Viskosität auf den Schneid- und Mischvorgang zu. Die bekannten Standardeinstellungen entsprechen deshalb nicht den optimalen Werten.

### [Stand der Technik]

Der Kutterprozeß wird gegenwärtig in der Praxis aus den oben aufgeführten Gründen individuell nach Erfahrung der Bedienperson bzw. nach abgeleiteten Standardwerten durchgeführt, die kein optimales Ergebnis gewährleisten.
Zur Verbesserung des Prozesses wird in der DE OS 3608856 vorgeschlagen, beim Zerkleinern nach einer Grundschüttung von Wasser die Temperatur nach einer bestimmten Zeit zu messen, und die restliche Schüttung in Abhängigkeit von der Temperaturdifferenz einer Standardcharge vorzunehmen. Hiermit wird nur auf die Erzielung einer optimalen Endtemperatur orientiert.
In dem DD WP 238719/ DE OS 3621871 wird als Grundlage einer Steuerung die Messung der Stromleitfähigkeit der Brätmasse vorgeschlagen. Die Lösung geht aufgrund der Messung dieses Parameters von einer Ermittlung des optimalen Auskutterungsgrades aus, berücksichtigen aber nicht die anderen Bedingungen des Prozesses und steuert nur die Kutterzeit, bzw. deren Abbruch.
Aus den DD WP 221064 und 260013 ist bekannt, auf der Grundlage des Leistungsverlaufes des Antriebes während der Zerkleinerung die Entwicklung des Bindungszustandes zu bestimmen und eine bzw. mehrere Wasserschüttungen vorzunehmen. Hier wird ebenfalls nur auf einen Parameter abgestellt. Es hat sich außerdem gezeigt, dass die indirekt gemessenen Werte zu sehr von anderen Größen beeinflußt werden und für eine Auswertung zu ungenau sind. In der DE OS 4022281 wird vorgeschlagen, die Schubspannung/Viskosität des Brätes laufend zu messen und davon abhängig die Messerdrehzahl, bzw. die Beendigung der Zerkleinerung zu steuern. Grundlage dieser Lösungen ist die Erkenntnis vom funktionalen Zusammenhang der Zunahme der Viskosität der Brätmasse beim Zerkleinern mit dem Prozeßablauf. Eine brauchbare Lösung zur Bestimmung der optimalen Wassermengenzugabe (Schüttung) unter Berücksichtigung des Wasserbindevermögens des aufgeschlossenen Eiweißes enthalten diese Lösungsvorschläge nicht.
Zum Schneidprozeß im Kutter ist es bekannt, dass der von der Schneidhaube (Messerhaube) gebildete Raum eine Stauwirkung hat, die die Schneidwirkung beeinflußt.
Es wurde deshalb schon eine herausnehmbare Stauwand vorgeschlagen (DE PS 962042). Eine Verkleinerung des Schneidhaubenraumes bewirkt einen stärkeren Rückstau der Brätmasse und damit eine intensivere Zerkleinerung und Mischung, was bei der Brühwurstherstellung erwünscht ist. Für die Rohwurstherstellung fördert ein geringer Rückstau dagegen eine gute Körnung. Die gleiche Wirkung haben Einsätze in der Messerhaube (DE PS 958723). Diese Lösungen ermöglichen aber nur vorab eine grobe Anpassung an die Schneidaufgabe und bleiben während des Kutterprozesses unverändert.

Der Brätzustand während des Zerkleinerungsprozesses durchläuft mehrere Phasen und verändert sich mit zunehmenden Zerkleinerungsgrad. Die feste Einstellung der Geometrie wirkt somit nur in einem begrenztem Kutterzeitraum optimal.
Ein zu starker Rückstau durch den Schneidhaubenraum bewirkt auch eine unerwünschte Erwärmung der Brätmasse. Der Rückstau ist die Folge von stofflichen Zustandsformen und Schneidparametern bezogen auf eine starre Haubengeometrie.
Zur Veränderung des Schneidhaubenraumes ist in der DE PS 2023066 vorgeschlagen worden, die Winkellage der Messer zu verändern. Das wird durch einen aufwendige Verstellmechanik bewirkt, die deshalb in der Praxis nicht angewendet wird.
Bekannt ist aus der Literatur auch die Wirkung des sogenannten Schneidspaltes zwischen der Kutterschüssel und den Messern für den Zerkleinerungsgrad, wobei der Einfluß des Schneidspaltes in der Schneidhaube dabei übersehen wird. Am Messerkopf sind die Messer deshalb bei einigen Schneidmischern radial verschiebbar befestigt.
Eine stoffzustandsabhängige Einstellung des Schneidspaltes ist nicht üblich. Die aufwendige radiale Verschiebbarkeit der Messer dient dazu, bei Einsatz neuer bzw. nachgeschliffener Messer einen möglichst geringen Schneidspalt zur Kutterschüssel zu gewährleisten. Für die verschiedenen Brätsorten werden die Messerköpfe insgesamt ausgewechselt, was auch einen erheblichen Aufwand erfordert.

### [Aufgabe der Erfindung]

Aufgabe der Erfindung ist es, ein Verfahren zu entwickeln, das eine Ermittlung der maximal möglichen Schüttung (Wassermenge) entsprechend den spezifischen Eigenschaften des Robstoffes während des Kutterprozeßes unter Einhaltung der Qualität der Brätmasse ermöglicht und weiterhin den Schneiddruck und/oder Durchflußspalt als Haltekraft für den Rohstoff ständig im optimalen Bereich, entsprechend der jeweiligen Brätsorte und des Prozeßablaufes, hält.

Erfindungsgemäß wird die Aufgabe durch die Merkmale des Anspruches 1 gelöst. Weitere spezielle Ausgestaltungen der Verfahrensschritte sind in den Unteransprüchen dargelegt.

Der Erfindung liegt die Erkenntnis zugrunde, dass ein von richt relevanten Größen unbeeinflußter Viskositätsverlauf und damit auswertbare Meßwerte nur bei Kutterung der reinen Fleischmasse gegeben ist. Die Zunahmegröße der Viskosität ist dabei kennzeichnend für das spezifische Wasserbindungsvermögen. Wesentlich für die qualitativ einwandfreie Wertung der Meßwerte ist in dieser Phase die weitgehende Vermeidung des Temperaturanstiegs in der Masse. Das erfolgt durch geeignete Maßnahmen wie z.B. Kühlung und Einstellung des Schneiddruckes und/oder Durchflußspaltes gemäß dieser Erfindung. Auf der Grundlage von Vergleichswerten kann die optimale Wassermenge für die Charge durch einen Prozeßrechner somit berechnet werden.
Die Erfindung geht weiterhin von der Erkenntnis aus, daß im Bereich der Schneidhaube der wesentliche Anteil der Zerkleinerungsund Mischarbeit erfolgt. Das ist bedingt durch die hohen Messerdrehzahlen. Die Messer ziehen dabei die Brätmasse in die Schneidhaube und der Schnitt erfolgt überwiegend gegen die Trägheit der Brätmasse und den sich aufbauenden Schneiddruck. Dadurch ist die anteilige Schneidarbeit zwischen den Messern und der Schneidhaubenwandung wesentlich größer als die zwischen den Messern und der Schüsselwandung. Mit einer Veränderung des Schneidhaubenraumes und des Durchflußspaltes im Bereich der Schneidhaube ist somit eine größere Beeinflussung und Steuerung der Schneid- und Mischarbeit möglich. Weiterhin sind die Bedingungen zum Zerkleinerungsbeginn, bei dem die Masse in Fleischstücken vorliegt, wesentlich anders als zum Abschluß. Die fertige Brätmasse (Brühwurst) hat einen plastisch-viskosen Zustand.
Mit einer Veränderung des Schneidhaubenraumes und/oder des Durchflußspaltes über die Zeit des Zerkleinerungsprozesses wird erfindungsgemäß eine Optimierung erzielt. Die Verarbeitungszeiten werden verkürzt, die Temperatur der Brätmasse kann im Verfahrensablauf beeinflußt und die Qualität der Brätmasse erhöht werden. Weiterhin wird die Optimierung der Wasserschüttung durch die bessere Temperaturführung und den verbesserten Eiweißaufschluß unterstützt.

### [Beispiele]

Nachfolgend soll das Verfahren und die Vorrichtung an zwei Beispielen für eine Brühwurstcharge erläutert werden.

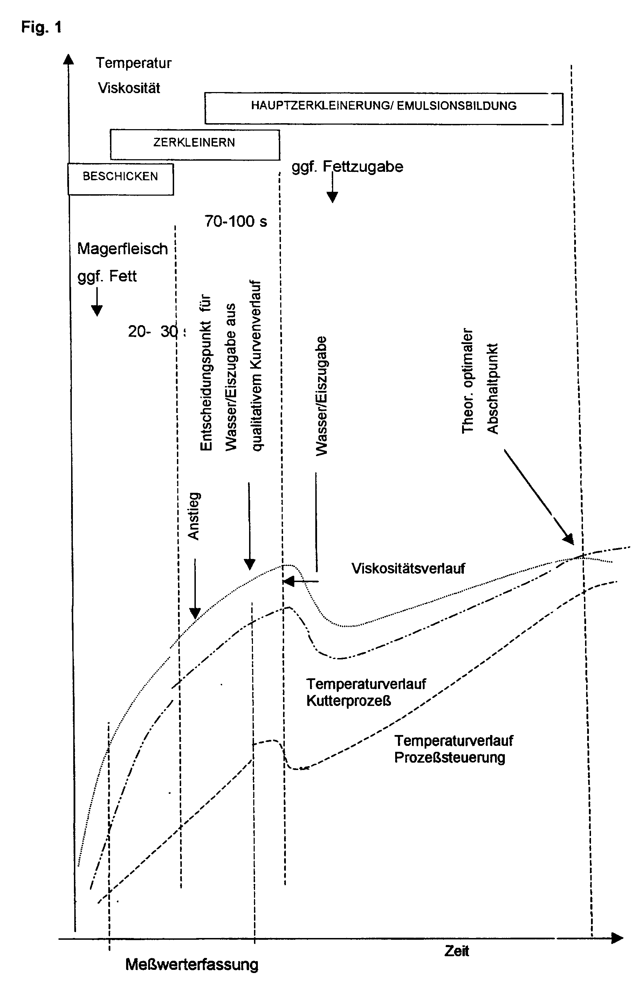

Die Figur 1 zeigt den Viskositäts- und Temperaturverlauf während des Kutterprozesses. Die Fleischmenge oder das Fleisch/Fettgemisch ohne die rezepturabhängigen Ingredienzien wird in die Kutterschüssel gegeben, wobei bereits eine Vorzerkleinerung erfolgt. Nunmehr beginnt die Zerkleinerungsphase mit vorgegebener Messerdrehzahl, die auch die Phase der Meßwertermittlung beinhaltet.
In einem Zeitraum von ca. 60 bis 100 s wird mittels eines in der Masse getauchten Sensors die Widerstandskraft (Viskosität) gemessen. Gleichzeitig erfolgt eine intensive Kühlung z. B. mittels Kühlmittel in einer doppelwandigen Schneidhaube. Der durch die Kühlung veränderte Temperaturverlauf wird in Figur 1 qualitativ dargestellt. Die Viskosität nimmt mit der Aufschließung des Eiweißes ständig zu.
Die Größe der Zunahme (Anstieg der vikositätskurve) wird von einem Rechner zwischengespeichert und mittels Vergleichswerten die Schüttungsmenge berechnet. Dabei wird ein geringer Temperaturanstieg der Masse korrigierend berücksichtigt. Nach einer vorgegebenen Zeit wird diese Schüttung als Wasser/Eismischung zugegeben.
Gleichzeitig oder anschließend werden die rezeptabhängigen Ingredienzien und ggf. der Fettanteil hinzugefügt und nach einer Misch- und Emulsionsbildungsphase der Kutterprozeß brätspezifisch beendet.
In einem zweiten Beispiel wird die Vorrichtung zur Schneidraumverstellung beschrieben.

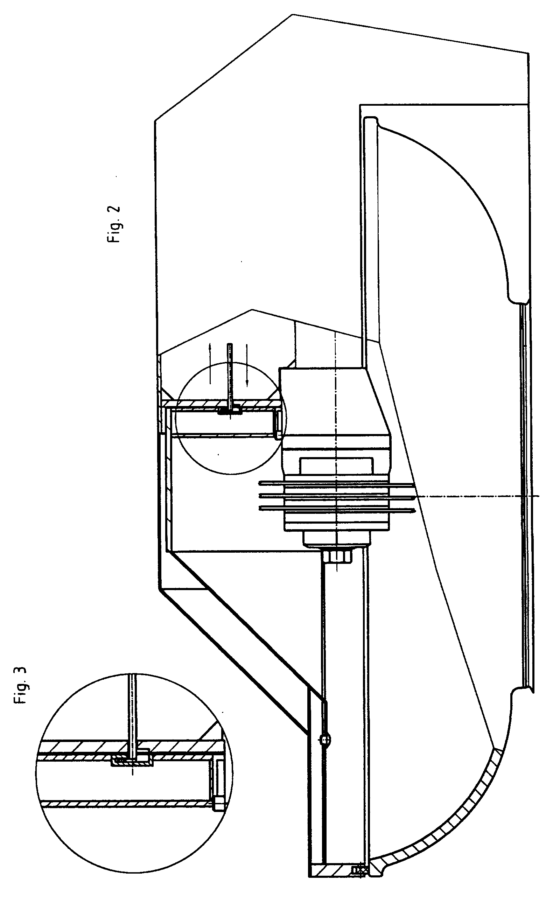

Die Fig. 2 zeigt die Kutterschüssel und Schneidhaube, sowie den Messerkopf in der Seitenansicht im Schnitt, die Fig. 3 zeigt die Einzelheit der Verbindung der Antriebsstange mit der zusätzlichen Haube.

Die Kutterschüssel besitzt eine etwa ringförmige Trogform mit einem kegelstumpfförmigen Mittelteil. Dieser ist in der Schnittdarstellung nicht ersichtlich. Der Messerarm erstreckt sich tangential über die Kutterschüssel, so daß die Messer des Messerkopfes in den Trog ragen. Der Bereich der Messerwelle, des Messerkopfes wird von einer Schneidhaube überdeckt, die sich auf den Rand der Kutterschüssel abstützt. Diese wird außerdem durch ein Gelenk am Maschinengestell gehalten, so daß sie nach oben/hinten schwenkbar ist. Neben der Sicherheitsfunktion hinsichtlich der Kuttermesser hat die Schneidhaube einen maßgeblichen Einfluß auf den Zerkleinerungsprozeß. So wird durch die Veränderung des Abstandes zwischen dem Messereinzugspaar und der in Drehrichtung der Kutterschüssel hinteren Seitenwand der Schneidhaube der Schneiddruck gesteuert und damit unter anderem die Haltekraft des Rohstoffes gegen die Schneidwirkung der Messer beeinflußt.
Gemäß der Erfindung ist in dieser Ausführungsform zwischen der Schneidhaube und dem Messerkopf eine zusätzliche Haube (Innenhaube) angeordnet. Diese ist an der Schneidhaube mittels Stifte und Nuten befestigt und waagerecht beweglich geführt. Eine horizontale Antriebsstange (Einzelheit gemäß Figur 3) durchdringt die Schneidhaube im Bereich des Messerwellenarmes und ist ausrastbar mit der Innenhaube verbunden. Mittels eines nicht dargestellten Antriebes und der Antriebsstange ist die Innenhaube horizontal z.B. 50 mm, je nach Baugröße, verschiebbar. Entsprechend angeordnete Dichtstreifen an der Schneidhaube und dem Messerwellenarm verhindern ein Eindringen von Brätmasse zwischen die beiden Hauben.
Zur Herstellung von Brühwurstbrät wird die Kutterschüssel mit Fleischstücken wie in Beispiel 1 beschickt. Vor Beginn der Zerkleinerung wird die Innenhaube in die äußere Endstellung verfahren, so daß ein maximaler Abstand zwischen dem Messereinzugspaar und der in Drehrichtung der Kutterschüssel hinteren Seitenwand entsteht. Die Zerkleinerung erfolgt dadurch bei einem geringem Schneiddruck, wodurch ein schneller Temperaturanstieg vermieden wird und so bedeutend mehr Schneidarbeit eingetragen werder kann.
Im Prozeßverlauf ist eine Emulgierung der Brätmasse bei höherer Temperatur erwünscht. Dazu wird nach der Messung der Werte, die Wasser/Eismischung zugegeben. Gleichzeitig oder anschließend werden die rezeptabhängigen Ingredienzien und ggf. der Fettanteil gemäß Beispiel 1 hinzugefügt. Mit fortschreitenden Kutterprozeß wird die Innenhaube zurückgefahren. Die dadurch entstehende Verkleinerung des Abstandes zwischen dem Messereinzugspaar und der in Drehrichtung der Kutterschüssel hinteren Seitenwand führt zur Schneiddruckänderung.
Die Bewegungssteuerung kann in Abhängigkeit vom Schneiddruck, der Viskosität der Brätmasse oder der Prozeßzeit erfolgen.

## Patentansprüche

1. Verfahren zum Steuern des Kutterns bei der Herstellung von Wurstbrät, insbesondere Brühwurstbrät, unter Messung von physikalischen Parametern der Brätmasse während der Zerkleinerung und davon abhängigen Schüttung bzw. Kutterungsverlauf und veränderbarem Schneidspalt oder Schneidraum, dadurch gekennzeichnet, dass
a) - erst nur der Fleisch- oder Fleisch/Fettanteil der herzustellenden Brätmasse ohne Schüttungsmenge und ohne weitere Ingredienzien eingebracht wird,
b) - in einer folgenden Meßwertermittlungsphase bei laufender Zerkleinerung der Zunahmewert der Widerstandskraft (Viskosität) der Masse ermittelt wird,
c) - während der Meßwertermittlungsphase die Maschineaparameter und die Einsatztemperatur der Masse unter definierten Bedingungen gehalten werden,
d) - und in Abhängigkeit vom Anstiegsverhalten der Widerstandskraft (Viskosität) der Masse die Schüttungsmenge berechnet und anschließend zugegeben wird, und/oder
e) - in Abhängigkeit von den verfahrensbestimmenden Prozeßparametern und den Stoffzustandsänderungen, der Schneidhaubenraum und/oder Durchflußspalt in der Schneidhaube in der Größe und/oder Geometrie und/oder Lage während der Prozeßstufen verändert wird.

2. Verfahren nach Anspruch 1, dadurch gekennzeichnet,
dass die Viskosität der Masse durch einen in die Brätmasse eintauchenden Sensor gemessen wird.

3. Verfahren nach Anspruch 1, dadurch gekennzeichnet,
dass die herzustellende Brätmasse während der Meßwertermittlungsphase intensiv gekühlt wird.

4. Verfahren nach Anspruch 1, dadurch gekennzeichnet,
dass die Viskosität der Masse durch indirekte Messungen, wie elektrische Leitfähigkeit, Schneiddruck, Drehmoment am Messerkopf, Stromaufnahme des Messerkopfantriebes als Korrelationswerte ermittelt wird.

5. Verfahren nach Anspruch 1 bis 4, dadurch gekennzeichnet,
dass während der Meßwertermittlungsphase gleichzeitig Hilfswerte wie Messerschärfe, Brättemperaturverlauf und Kutterzeit registriert und korrigierend berücksichtigt werden.

6. Verfahren nach Anspruch 1 bis 5, dadurch gekennzeichnet,
dass
a) die ermittelten Meßwerte zur Viskosität durch einen Prozeßrechner zwischengespeichert und
b) die Schüttmenge aufgrund von vorgegebenen Vergleichwerten berechnet wird,
c) wobei Hilfswerte wie Messerschärfe, Brättemperaturverlauf und Kutterzeit korrigierend berücksichtigt werden.

7. Verfahren nach Anspruch 1 bis 6, dadurch gekennzeichnet,
dass die errechnete Schüttmenge nach deren Ermittlung in einer vorbestimmten Zeit in einer Menge oder Teilmengen als Wasser, Wasser- Eis oder Eis zugegeben wird.

8. Verfahren nach Anspruch 1 bis 7, dadurch gekennzeichnet,
dass das Kuttern nach Zugabe und Einarbeiten der Schüttung, der Ingredienzien und ggf. des Fettanteiles brätspezifisch beendet wird.

9. Verfahren nach Anspruch 1, dadurch gekennzeichnet,
dass während des Kutterprozesses, in Abhängigkeit von der fortschreitenden Brätbildung, der Schneidhaubenraum und/oder Durchflußspalt in der Schneidhaube in der Größe und/oder Geometrie und/oder Lage verändert wird.

10. Verfahren nach Anspruch 1 und 9, dadurch gekennzeichnet,
dass während des Kutterprozesses, in Abhängigkeit von der fortschreitenden Veränderung der Viskosität bzw. des Zerkleinerungsgrades der Brätmasse, der Schneidhaubenraum und/oder Durchflußspalt in der Schneidhaube in der Größe und/oder Geometrie und/oder Lage verändert wird.

11. Verfahren nach Anspruch 1 und 9, dadurch gekennzeichnet,
dass während des Kutterprozesses, in Abhängigkeit von der Schneid- und Mischzeit, der Schneidhaubenraum und/oder Durchflußspalt in der Schneidhaube in der Größe und/oder Geometrie und/oder Lage verändert wird.

12. Verfahren nach Anspruch 1 und 9, dadurch gekennzeichnet,
dass während des Kutterprozesses, in Abhängigkeit von der Brättemperatur, der Schneidhaubenraum und/oder Durchflußspalt in der Schneidhaube in der Größe und/oder Geometrie und/oder Lage verändert wird.

13. Verfahren nach Anspruch 1 und 9 bis 12, dadurch gekennzeichnet,
dass der Schneidhaubenraum und/oder Durchflußspalt in der Schneidhaube in der Größe und/oder Geometrie und/oder Lage in Abhängigkeit von der herzustellenden Brätmasse voreingestellt wird.

14. Verfahren nach Anspruch 1 und 9 bis 13, dadurch gekennzeichnet,
dass der Schneidhaubenraum und/oder Durchflußspalt in der Schneidhaube in der Größe und/oder Geometrie und/oder Lage durch einen Prozeßrechner auf der Basis der Kutterprozeßwerte gesteuert wird.

15. Vorrichtung zur Durchführung des Verfahrens nach Anspruch 1 und 9 bis 14, dadurch gekennzeichnet,
dass zur schneidraumverstellung in der Schneidhaube eine zusätzliche Haube horizontal verschiebbar, parallel zur Messerwelle, gelagert und mit einem Verstellantrieb verbunden ist, der in Abhängigkeit von verfahrensbestimmenden Prozeßparametern gesteuert wird.

16. Vorrichtung zur Durchführung des Verfahrens nach Anspruch 1 und 9 bis 14, dadurch gekennzeichnet,
dass die in Drehrichtung der Kutterschüssel hintere Seitenwand der Schneidhaube an der Schneidhaube horizontal verschiebbar gelagert ist, wobei sich die Rückwand der Schneidhaube über den Verschiebebereich entsprechend parallel erstreckt.

17. Vorrichtung zur Durchführung des Verfahrens nach Anspruch 1 und 9 bis 14, dadurch gekennzeichnet,
dass die Schneidhaube in Bezug auf den Messerkopf horizontal verschiebbar gelagert und mit einem Verstellantrieb verbunden ist, der in Abhängigkeit von verfahrensbestimmenden Prozeßparametern gesteuert wird.

18. Vorrichtung zur Durchführung des Verfahrens nach Anspruch 1 und 9 bis 14, dadurch gekennzeichnet,
dass vor der Rückwand der Messerhaube eine zusätzliche Wandung zwischen den Seitenwänden radial zur Messerwelle verschiebbar angeordnet ist.

19. Vorrichtung zur Durchführung des Verfahrens nach Anspruch 1 und 9, dadurch gekennzeichnet,
dass die Vorrichtungen zur Verstellung des Schneidraumes und Durchflußspaltes kombiniert sind.
